# EUROPÄISCHE PATENTANMELDUNG

(11) **EP 4 184 020 A1**
(43) Veröffentlichungstag der Anmeldung: **24.05.2023**
(21) Anmeldenummer: 21209231.6
(22) Anmeldetag: 19.11.2021
(51) Int. Cl.: F16B 15/08, F16B 27/00

(54) **MAGAZIN, BEFÜLLTES MAGAZIN SOWIE VERWENDUNG**

(71) Anmelder: Hilti Aktiengesellschaft, 9494 Schaan (LI)
(72) Erfinder: Lukic, Sasha, 9470 Buchs (CH); Baumgartner, Gerard, 6003 Luzern (CH); Sprenger, Marius, 9470 Buchs (CH); Ziltener, Michael, 8854 Siebnen (CH)
(74) Vertreter: Hilti Aktiengesellschaft Corporate Intellectual Property

(57) **Zusammenfassung**

Die Erfindung betrifft ein Magazin (11), geeignet zur Aufnahme wenigstens einen Befestigungsmittels (100). Das Magazin (11) umfasst eine Deckschicht (12) und eine Unterschicht (16), wobei das Magazin (11) für jedes aufzunehmende Befestigungsmittel (100) eine durch die Deckschicht (12) und die Unterschicht (16) hindurch reichende Ausnehmung (14) aufweist, wobei die Deckschicht (12) und die Unterschicht (16) miteinander verbunden sind, und wobei die Deckschicht (12) und die Unterschicht (16) in einem zusammenhängenden, die Ausnehmung (14) einschließenden und über die Ausnehmung (14) hinaus reichenden, freien Bereich (20) nicht miteinander verbunden sind. Des Weiteren betrifft die Erfindung ein mit wenigstens einem Befestigungsmittel (100) befülltes Magazin (10) sowie eine Verwendung desselben. Die Erfindung ermöglicht eine sichere Bereitstellung von Befestigungsmitteln (100) mit einem Kragen (112). Insbesondere kann das Risiko eines unbeabsichtigten Herausfallens der Befestigungsmittel (100) aus dem Magazin (11) gesenkt werden.

## Beschreibung

Die Erfindung geht aus von einem Magazin, das geeignet zur Aufnahme wenigstens eines Befestigungsmittels ist.

Oftmals sind Bauelemente, beispielsweise Installationselemente, an Wände, Decken oder Böden eines Gebäudes oder dergleichen mit Befestigungsmitteln zu befestigen. Da zur Befestigung eine Vielzahl solcher Befestigungsmittel benötigt wird, kommen Magazine zum Einsatz. Diese stellen mehrere der Befestigungsmittel auf einfache Weise einem Benutzer zur Verfügung.

Aus der DE10162635 A1 ist beispielsweise ein bandförmiges Schraubenmagazin bekannt, dass für Befestigungsmittel wie beispielsweise Schrauben verwendet werden kann.

Manche Befestigungsmittel weisen einen Kragen auf. Zusammen mit einem Kopf des Befestigungsmittels weist ein solches Befestigungsmittel ein vergleichsweise hohes Gewicht auf. Das Gewicht ist dabei besonders ungleich über die Länge des Befestigungsmittels hinweg verteilt. Je nach Lage des Magazins kann daher ein Risiko bestehen, dass das Befestigungsmittel aus dem Magazin herausfällt.

Aufgabe der vorliegenden Erfindung ist es daher, ein Magazin anzubieten, dass eine sichere Magazinierung von Befestigungsmitteln mit Kragen ermöglicht.

Gelöst wird die Aufgabe durch ein Magazin, geeignet zur Aufnahme wenigstens eines Befestigungsmittels, dass eine Deckschicht und eine Unterschicht umfasst. Das Magazin weist für jedes aufzunehmende Befestigungsmittel eine durch die Deckschicht und die Unterschicht hindurch reichende Ausnehmung auf. Die Deckschicht und die Unterschicht sind miteinander verbunden. Jedoch sind die Deckschicht und die Unterschicht in einem zusammenhängenden, die Ausnehmung einschließenden und über diese hinaus reichenden freien Bereich nicht miteinander verbunden.

Der freie Bereich kann beispielsweise eine Ausdehnung aufweisen, die einem größten Querschnitt eines Kragens eines im Magazin aufzunehmenden Befestigungsmittels entspricht. Der größte Querschnitt des Kragens kann als Kragenquerschnitt bezeichnet werden. Vorzugsweise kann die Aufnahme im Querschnitt kleiner als der Kragenquerschnitt sein.

Somit lässt sich angrenzend an die Aufnahme, insbesondere im freien Bereich, zwischen der Deckschicht und der Unterschicht ein Freiraum ausbilden, in dem der Kragen des aufzunehmenden Befestigungsmittels aufnehmbar ist.

In diesem Freiraum, insbesondere zwischen der Deckschicht und der Unterschicht, kann somit das Befestigungsmittel gehalten werden. Die übrigen Teile des Befestigungsmittels können beidseits durch die Ausnehmung hindurch und beispielsweise über die Deckschicht und / oder über die Unterschicht herausragen.

Um das Befestigungsmittel aus dem Magazin herauszulösen, kann es, beispielsweise an einem Kopf des Befestigungsmittels, durch die Ausnehmung zur Seite der Unterschicht aus dem Magazin herausgedrückt werden.

Je nach Material der Unterschicht kann sich diese dabei verformen und dadurch das Befestigungsmittel freigeben. Alternativ oder ergänzend kann die Unterschicht auch brechen und / oder durchtrennt werden, um auf diese Weise wiederum das Befestigungsmittel frei zu geben. So ist auch denkbar, dass durch Drehen des Befestigungsmittels eine mit einem scharfkantigen Abschnitt versehenen Unterseite des Kragens die Unterschicht durchtrennt, wodurch auch auf diese Weise das Befestigungsmittel aus dem Magazin herausgelöst werden kann.

Günstig ist dabei auch, dass das Befestigungsmittel nicht nur zur Unterschicht hin, sondern auch zur Deckschicht hin im Magazin gehalten werden kann. Somit kann das Befestigungsmittel in beliebiger Lage des Magazins im Magazin gehalten werden.

Somit können auch Arbeiten sowohl an einer Decke, an einem Boden und / oder einer Wand ausgeführt werden, ohne dass aus dem Magazin unbeabsichtigt Befestigungsmittel herausfallen, sodass sich eine besonders sichere Möglichkeit der Magazinierung ergibt.

Das Befestigungsmittel kann besonders einfach aus dem Magazin herausgelöst werden, wenn die Unterschicht an wenigstens einer der Ausnehmungen geschlitzt und / oder perforiert ist. Vorzugsweise kann die Unterschicht radial geschlitzt sein. Beispielsweise kann sie mehrere Schlitze ausgehend von der Ausnehmung und radial von einer Mitte der Ausnehmung weg gerichtet verlaufend aufweisen.

Die Deckschicht und die Unterschicht sind zumindest an einer Stelle miteinander verbunden, zwischen ihnen besteht somit eine Verbindung.

Die Verbindung kann beispielsweise eine Verklebung sein. Mit anderen Worten können die Deckschicht und die Unterschicht miteinander verklebt sein. Dies lässt sich maschinell sehr einfach bewerkstelligen. Zur Verklebung kann sich eine Klebeschicht zumindest bereichsweise zwischen der Deckschicht und der Unterschicht befinden.

Eine besonders feste und umweltfreundliche Verbindung lässt sich erreichen, wenn die Deckschicht und die Unterschicht miteinander vernäht sind.

Denkbar ist auch, dass die Deckschicht und die Unterschicht miteinander verpresst, verfaltet und / oder verfilzt sind.

Es entspricht der Erfahrung, dass Reststoffe auf Baustellen nicht immer ordnungsgemäß entsorgt werden. Daher ist es wünschenswert, wenn etwaige Reststoffe umweltunschädlich ausgebildet sind. Dies kann erreicht werden, wenn die Deckschicht und / oder die Unterschicht aus einem biologisch abbaubaren Material ausgebildet sind. Ein Material kann beispielsweise als biologisch abbaubar gelten, wenn 90 Prozent des Materials in einem wässrigen Medium innerhalb von 180 Tagen biologisch zersetzbar sind. Denkbar ist alternativ oder ergänzend auch, dass ein Material als biologisch abbaubar gilt, wenn es eine für dieses Material geltende Norm zur Kompostierbarkeit und / oder biologischen Abbaubarkeit erfüllt.

Ein solches Material kann beispielsweise eine Naturfaser umfassen. Denkbar ist beispielsweise auch, dass das Material Holz umfasst. Alternativ oder ergänzend kann es auch ein Gras umfassen. Beispielsweise kann das biologisch abbaubare Material Papier, Pappe, ein Hanf und / oder Bambus umfassen.

Somit können Umweltschäden vermieden werden, selbst wenn ein Benutzer des Magazins dieses nach Nutzung nicht ordnungsgemäß entsorgt.

Insbesondere für diesen Fall ist es besonders vorteilhaft, wenn das Magazin vollständig biologisch abbaubar ist. Dabei kann sich "vollständig" auf die Hauptkomponenten der Deckschicht bzw. der Unterschicht beschränken. Beispielsweise kann auch ein Magazin von "vollständig biologisch abbaubar" umfasst sein, das in sehr geringen Mengen, beispielsweise weniger als 5 Gewichts-Prozent, insbesondere weniger als 1 Gewichts-Prozent, besonders bevorzugt weniger als 1 Gewichts-Promille, nicht biologisch abbaubare Stoffe aufweist. Solche Stoffe können beispielsweise Farbpigmente von Beschriftungen oder dergleichen des Magazins sein. Besonders bevorzugt ist allerdings auch, wenn Beschriftungen ausschließlich aus biologisch abbaubaren Materialien ausgebildet sind.

Zur vollständigen biologischen Abbaubarkeit können die Deckschicht, die Unterschicht und ggf. die Klebeschicht aus biologisch abbaubaren Materialien ausgebildet sein. Sind die Deckschicht und die Unterschicht mit einem Faden vernäht, so kann der Faden vorzugsweise ebenfalls aus einem biologisch abbaubaren Material ausgebildet sein.

Auch ist bei einer solchen Ausführungsform denkbar, dass die Deckschicht und die Unterschicht weder mit einem Klebstoff noch mit einem Faden verbunden sind. Dies kann beispielsweise der Fall sein, wenn sie verpresst, verfaltet und / oder verfilzt sind.

Das Magazin kann besonders günstig handhabbar sein, wenn es streifenförmig ausgebildet ist.

Um beispielsweise bestimmte Anzahlen von Befestigungsmitteln dem Magazin am Stück entnehmen zu können, kann das Magazin an wenigstens einer Stelle eine Perforierung und / oder eine Engstelle aufweisen. Entlang der Perforierung bzw. der Engstelle kann das Magazin in mehrere Teile geteilt werden.

Um das Magazin einfach mit einer Werkzeugmaschine, beispielsweise einer Handwerkzeugmaschine oder einem Bauroboter, verwenden zu können, kann das Magazin ein Lochraster und / oder eine Führungsnut aufweisen.

In den Rahmen der Erfindung fällt des Weiteren ein befülltes Magazin. Das befüllte Magazin umfasst ein Magazin der vorangehend beschriebenen Art. Das Magazin ist mit wenigstens einem Befestigungsmittel mit einem Kragen befüllt. Der Kragen des Befestigungsmittels sitzt dabei zwischen der Deckschicht und der Unterschicht. Somit ist das Befestigungsmittel im Magazin gehalten. Vorzugsweise weist das befüllte Magazin eine Vielzahl, beispielsweise wenigstens 5, 10 oder 20, Befestigungsmittel auf.

Das Befestigungsmittel kann beispielweise ein Schraubanker sein. Alternativ oder ergänzend kann es auch ein Nagel sein. Beispielsweise kann es sich um einen Betonanker, beispielsweise eine Betonschraube, handeln.

Auch ist denkbar, dass das Befestigungsmittel zur Fixierung von Dämmstoffen eingerichtet ist. Insbesondere kann es als Dämmstoffanker mit einem Kragen ausgebildet sein.

Auch fällt in den Rahmen der Erfindung eine **Verwendung** eines befüllten Magazins der vorangehend beschriebenen Art durch einem Bauroboter zum Setzen eines Befestigungsmittels in eine Decke und / oder eine Wand auf einer Baustelle. Die Baustelle kann beispielsweise eine Hochbau- und / oder eine Tiefbaubaustelle sein und / oder umfassen.

Der Bauroboter kann eine Werkzeugmaschine aufweisen, beispielsweise ein Setzgerät zum Setzen des Befestigungsmittels. Er kann einen Manipulator aufweisen. Die Werkzeugmaschine kann am Manipulator angeordnet sein. Der Manipulator kann beispielsweise als mehrachsiger Arm ausgebildet sein. Er kann auch eine Hebevorrichtung aufweisen. Der Manipulator kann wenigstens drei Freiheitsgrade, beispielsweise wenigstens sechs Freiheitsgrade aufweisen. Insbesondere kann dann der Bauroboter zur Ausführung von Bauarbeiten, insbesondere zum Setzen der Befestigungsmittel, in die Decke und / oder in die Wand eingerichtet sein.

Das Magazin kann an der Werkzeugmaschine anordenbar sein. Die Werkzeugmaschine kann, insbesondere in Zusammenarbeit mit dem Manipulator, eingerichtet sein, dem Magazin nacheinander Befestigungselemente zu entnehmen und diese jeweils, insbesondere in die Decke und / oder in die Wand, zu setzen.

Dadurch, dass die Befestigungsmittel unabhängig von der Lage des Magazins sicher in diesem gehalten werden können und somit nicht unbeabsichtigt herausfallen, kann die Werkzeugmaschine die Befestigungsmittel in nahezu beliebigen Lagen und / oder Richtungen setzen, insbesondere horizontal und / oder vertikal. Die Werkzeugmaschine kann mit hoher Geschwindigkeit repositioniert werden, ohne dass durch entstehende Beschleunigungen Befestigungsmittel aus dem Magazin herausfallen. Somit kann auf einer Baustelle eine hohe Setzfrequenz erzielt werden. Zudem lässt sich die Zuverlässigkeit der Setzvorgänge durch die Verwendung des Magazins steigern. Dies ist insbesondere beim Einsatz von Baurobotern und hier insbesondere zur Erzielung eines möglichst hohen Autonomiegrades, wichtig.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: ein befülltes Magazin;
- Fig. 2: einen Längsschnitt durch ein Befestigungsmittel mit einem Kragen;
- Fig. 3: einen Ausschnitt aus einem befüllten Magazin in einer schematischen Querschnittsdarstellung;
- Fig. 4: eine Deckschicht in einer Draufsicht;
- Fig. 5: eine Unterschicht in einer Draufsicht;
- Fig. 6: eine Deckschicht mit einer Klebeschicht in einer Draufsicht; und
- Fig. 7: eine befülltes Magazin in einer perspektivischen Darstellung von unten.

In der nachfolgenden Beschreibung der Figuren werden zur Erleichterung des Verständnisses der Erfindung für gleiche oder sich funktional entsprechende Elemente jeweils die gleichen Bezugszeichen verwendet. Zur Vereinfachung der Darstellung ist bei mehreren gleichartigen Elementen in den einzelnen Figuren jeweils nur eines der Elemente mit einem Bezugszeichen versehen.

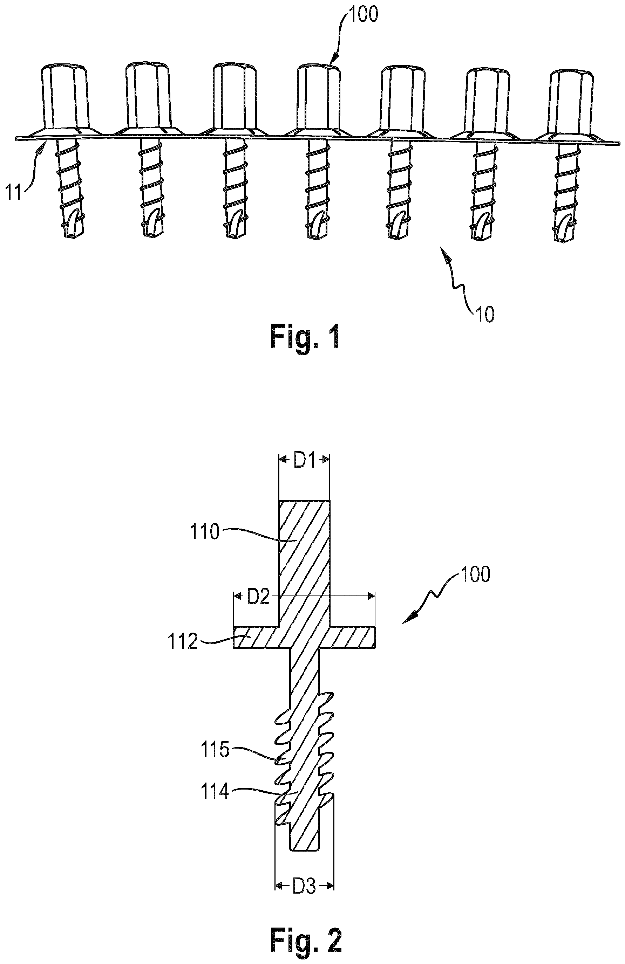

**Fig. 1** zeigt in einer perspektivischen Darstellung eine Seite eines befüllten Magazins 10. Das befüllte Magazin 10 weist ein Magazin **11** auf, in dem mehrere Befestigungsmittel **100** aufgenommen sind.

**Fig. 2** zeigt eines der Befestigungsmittel 100 in einem Längsschnitt. Das Befestigungsmittel 100 weist einen Kopf **110** auf. An den Kopf 110 grenzt ein Kragen **112.** Hieran grenzt wiederum ein Schaft **114** an.

Bei diesem Ausführungsbeispiel ist das Befestigungsmittel 100 mit dem Kragen 112 als Schraubanker ausgeführt. Dazu weist es ein Gewinde **115** auf. Das Befestigungsmittel 100 kann beispielsweise eine Betonschraube sein.

Bei dem Befestigungsmittel 100 gemäß Fig. 2 weist der Kopf 110 einen Durchmesser **D1** auf. Der Kragen 112 weist ein Durchmesser **D2** und der Schaft 114 einen Durchmesser **D3** auf.

Dabei ist der Durchmesser D2 des Kragens 112 größer als der Durchmesser D1 des Kopfes 110. Dieser wiederum ist größer als der Durchmesser D3 des Schafts 114.

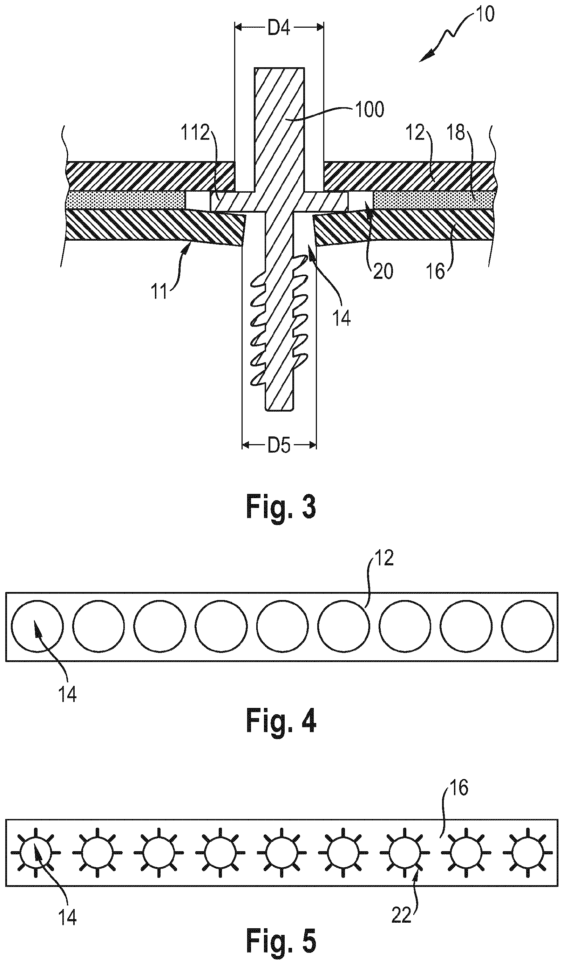

**Fig. 3** zeigt ein befülltes Magazin 10 in einer Querschnittsansicht. Insbesondere ist ein Ausschnitt mit einem Befestigungsmittel 100 abgebildet. Zu erkennen ist eine Deckschicht **12.**

Die Deckschicht 12 weist eine Vielzahl von Ausnehmungen **14** auf, von denen im Ausschnitt gemäß Fig. 3 beispielhaft lediglich eine zu erkennen ist.

Gegenüberliegend der Deckschicht 12, auf einer Unterseite der Deckschicht 12, befindet sich eine Unterschicht **16.**

Zwischen der Deckschicht 12 und der Unterschicht 16 befindet sich zumindest bereichsweise eine Klebeschicht **18.** Die Klebeschicht 18 verbindet die Deckschicht 12 mit der Unterschicht 16.

Die Ausnehmungen 14 reichen durch die Deckschicht 12 und die Unterschicht 16 hindurch. Insgesamt ist somit das Magazin 11 ausgebildet.

Zwischen der Deckschicht 12 und der Unterschicht 16 befinden sich in den Umgebungen der Ausnehmungen 14 freie Bereiche **20.**

Im in Fig. 3 gezeigten freien Bereich 20 sitzt das Befestigungsmittel 100 mit seinem Kragen 112. Es ist somit durch die Deckschicht 12 und die Unterschicht 16, insbesondere deren Ränder im Bereich der Ausnehmung 14 gegen ein Herausfallen aus dem Magazin 11 gesichert.

Die Ausnehmungen 14 weisen im Bereich der Deckschicht 12 einen Durchmesser **D4** auf, der bei diesem Ausführungsbeispiele größer ist als der Durchmesser **D5** der Ausnehmungen 14 im Bereich der Unterschicht 16.

Somit kann ein Befestigungsmittel 100 in das Magazin 11 bzw. in eine unbesetzte Ausnehmung 14 eingesetzt werden, in dem es von oben, d. h. oberseitig der Deckschicht 12, in die Ausnehmung 14 eingeführt wird, sodass sich die Ränder der Deckschicht 12 um die jeweilige Ausnehmung 14 herum krümmen, bis der Kragen 112 in den freien Bereich 20 gelangt, jedoch noch nicht durch die Unterschicht 16 bzw. an deren Ränder der Ausnehmung 14 herausrutscht.

In Fig. 3 ist dabei zu erkennen, dass durch die Aufnahme des Befestigungsmittels 100 die Unterseite 16 bereichsweise, insbesondere an den Rändern der Unterseite 16, gekrümmt verläuft. Denkbar ist auch, dass eine solche Krümmung auch bei der Deckschicht 12 auftritt.

**Fig. 4** zeigt nun eine Deckschicht 12 in einer schematischen Draufsicht. Die Deckschicht 12 ist als Streifen und somit insbesondere streifenförmig ausgebildet.

Die Deckschicht 12 weist mehrere, in diesem Ausführungsbeispiel neun, Ausnehmungen 14 auf, von denen aus Darstellungsgründen lediglich eine Ausnehmung 14 mit einem Bezugszeichen versehen ist. Die Ausnehmungen 14 befinden sich in regelmäßigen Abständen in der Deckschicht.

Die Deckschicht 12 ist aus biologisch vollständig abbaubarem, beispielsweise ungebleichtem, Papier ausgebildet.

**Fig. 5** zeigt eine zu der Deckschicht 12 gemäß Fig. 4 passende Unterschicht 16. Diese Unterschicht 16 weist auch die Ausnehmungen 14 auf. Diese sind passend zu der Positionierung der Ausnehmungen 14 in der Deckschicht 12 gemäß Fig. 4 in regelmäßiger Weise in der Unterschicht 16 ausgebildet.

Auch die Unterschicht 16 ist, insbesondere passend zur Deckschicht 12, als Streifen ausgebildet.

Die Ausnehmungen 14 weisen an ihren Rändern mehrere Schlitze **22** auf. Von den Schlitzen 22 ist in Fig. 5 aus Gründen der Übersichtlichkeit beispielhaft lediglich ein Schlitz 22 mit einem Bezugszeichen versehen.

Die Schlitze 22 laufen radial von den Ausnehmungen 14 weg. Insbesondere 10 sternförmig ausgebildet.

Bei diesem Ausführungsbeispiel sind jeweils 8 Schlitze 22 je Ausnehmung 14 vorgesehen. Denkbar ist alternativ auch, weniger, beispielsweise 2, 3, 4, 5 oder 6 Schlitze 22, oder auch mehr als 8 Schlitze, beispielsweise 12 Schlitze 22, je Ausnehmung 14 vorzusehen.

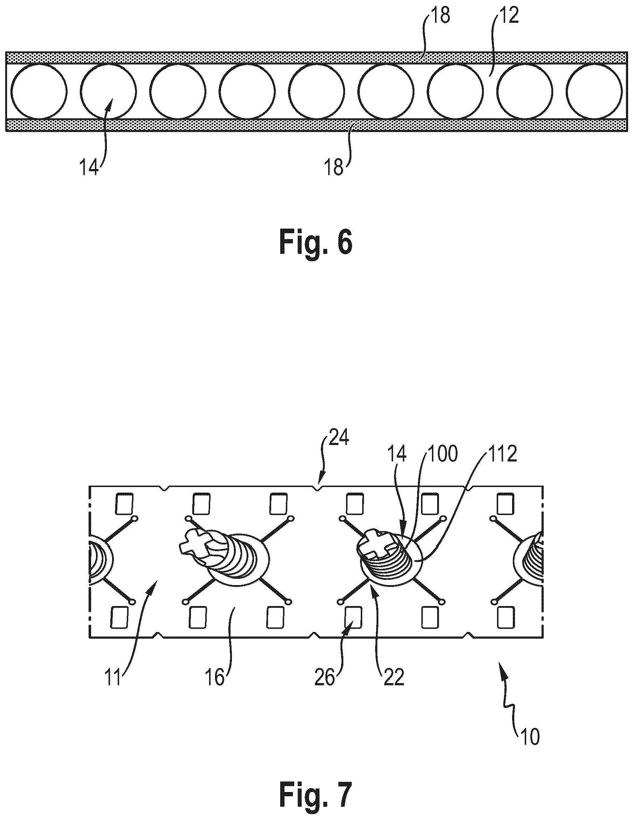

**Fig. 6** zeigt eine weitere Deckschicht 12 von einer Unterseite. An der Unterseite befindet sich bereits die Klebeschicht 18. Zu erkennen ist, dass die Klebeschicht 18 die Deckschicht 12 lediglich bereichsweise bedeckt. Insbesondere verläuft sie linienförmig entlang von Längskanten der Deckschicht 12. Die Klebeschicht 18 umfasst somit zwei Klebestreifen.

Die Klebeschicht 18 verläuft insbesondere derart, dass sie nicht in die Ausnehmungen 14 hineinragt.

Vorzugsweise ist die Klebeschicht 18 aus einem vollständig biologisch abbaubaren Kleber ausgebildet.

**Fig. 7** zeigt ein weiteres bestücktes Magazin 10 einer perspektivischen Ansicht von schräg unten.

Das bestückte Magazin 10 weist wiederum ein Magazin 11 auf, in dem mehrere Befestigungsmittel 100 mit ihren Kragen 112 aufgenommen sind.

Vom Magazin 11 ist in der Darstellung gemäß Fig. 7 insbesondere die Unterschicht 16 zu erkennen.

In das Magazin 11, insbesondere gleichermaßen in die Deckschicht 12 (in Fig. 7 nicht dargestellt) und die Unterschicht 16, sind in regelmäßigen Abständen Engstellen **24** ausgebildet. In diesem Ausführungsbeispiel befinden sie sich entlang der Seitenkanten des Magazins 11. Die Engstellen 24 können beispielsweise ausgestanzt sein.

Durch die Engstellen 24 lässt sich das Magazin 11 bedarfsgerecht manuell in mehrere Teile teilen.

Weiter weist das Magazin 11 ein Lochraster **26** auf. Das Lochraster 26 verläuft längs des Magazins 11. Es weist in regelmäßigen Abständen ausgebildete, insbesondere rechteckige, Ausstanzungen auf. Mithilfe des Lochraster 26 können in einer mit einem entsprechenden Transportsystem ausgestatteten Werkzeugmaschine, beispielsweise einem Schraubanker-Setzgerät mit einer selbsttätigen Befestigungsmittelzuführung, nacheinander Befestigungsmittel 100 des Magazins 11 ausgewählt und verarbeitet werden. Dazu kannn die Befestigungsmittelzuführung beispielsweise einen Kettentrieb und / oder einen Zahnradtrieb aufweisen.

Bei dem Ausführungsbeispiele gemäß Fig. 7 ist weiter zu erkennen, dass das Magazin 11 wiederum im Bereich der Ausnehmungen 14 Schlitze 22 aufweist. Bei diesem Ausführungsbeispiel sind je Ausnehmung 14 jeweils vier Schlitze 22 vorgesehen. Sie verlaufen radial von der jeweiligen Ausnehmung 14 weg, zueinander jedoch in diesem Ausführungsbeispiel in Form eines X, insbesondere also kreuzweise.

Bei diesem Ausführungsbeispiel weisen sowohl die Unterschicht 16 als auch die Deckschicht 12 sich entsprechende Schlitze 22 auf.

### Bezugszeichenliste

- 10: befülltes Magazin
- 11: Magazin
- 12: Deckschicht
- 14: Ausnehmung
- 16: Unterschicht
- 18: Klebeschicht
- 20: freier Bereich
- 22: Schlitz
- 24: Engstelle
- 26: Lochraster
- 100: Befestigungsmittel
- 110: Kopf
- 112: Kragen
- 114: Schaft
- 115: Gewinde
- D1: Durchmesser
- D2: Durchmesser
- D3: Durchmesser
- D4: Durchmesser
- D5: Durchmesser

## Patentansprüche

1. **Magazin (11),** geeignet zur Aufnahme wenigstens einen Befestigungsmittels (100),
- umfassend eine Deckschicht (12) und eine Unterschicht (16),
- wobei das Magazin (11) für jedes aufzunehmende Befestigungsmittel (100) eine durch die Deckschicht (12) und die Unterschicht (16) hindurch reichende Ausnehmung (14) aufweist,
- wobei die Deckschicht (12) und die Unterschicht (16) miteinander verbunden sind, und
- wobei die Deckschicht (12) und die Unterschicht (16) in einem zusammenhängenden, die Ausnehmung (14) einschließenden und über die Ausnehmung (14) hinaus reichenden, freien Bereich (20) nicht miteinander verbunden sind.

2. Magazin nach dem vorhergehenden Anspruch, **dadurch gekennzeichnet, dass** die Unterschicht (16) an wenigstens einer der Ausnehmungen (14), vorzugsweise radial, geschlitzt und / oder perforiert ist.

3. Magazin nach einem der vorhergehenden Ansprüche, **dadurch gekennzeichnet, dass** die Deckschicht (12) und die Unterschicht (16) miteinander verklebt sind.

4. Magazin nach einem der vorhergehenden Ansprüche, **dadurch gekennzeichnet, dass** die Deckschicht (12) und die Unterschicht (16) miteinander vernäht sind.

5. Magazin nach einem der vorhergehenden Ansprüche, **dadurch gekennzeichnet, dass** die Deckschicht (12) und die Unterschicht (16) miteinander verpresst, verfaltet und / oder verfilzt sind.

6. Magazin nach einem der vorhergehenden Ansprüche, **dadurch gekennzeichnet, dass** die Deckschicht (12) und / oder die Unterschicht (16) aus einem biologisch abbaubaren Material ausgebildet sind.

7. Magazin nach einem der vorhergehenden Ansprüche, **dadurch gekennzeichnet, dass** das Magazin (11) vollständig biologisch abbaubar ist.

8. Magazin nach einem der vorhergehenden Ansprüche, **dadurch gekennzeichnet, dass** das Magazin (11) streifenförmig ausgebildet ist.

9. Magazin nach einem der vorhergehenden Ansprüche, **dadurch gekennzeichnet, dass** das Magazin (11) an wenigstens einer Stelle eine Perforierung und / oder eine Engstelle (24) aufweist.

10. Magazin nach einem der vorhergehenden Ansprüche, **dadurch gekennzeichnet, dass** das Magazin (11) ein Lochraster (26) und / oder eine Führungsnut aufweist.

11. **Befülltes Magazin (10),** umfassend ein Magazin (11) nach einem der vorhergehenden Ansprüche und wenigstens ein Befestigungsmittel (100) mit einem Kragen (112), wobei der Kragen (112) des Befestigungsmittels (100) zwischen der Deckschicht (12) und der Unterschicht (16) des Magazins (11) sitzt.

12. **Verwendung** eines befüllten Magazins (10) nach Anspruch 11 durch einen Bauroboter zum Setzen eines Befestigungsmittels (100) in eine Decke und / oder eine Wand auf einer Baustelle.
